Europäisches Patentamt

European Patent Office

Office européen des brevets

(11) Publication number: **0 428 133 A2**

# EUROPEAN PATENT APPLICATION

(21) Application number: 90121711.7

(51) Int. Cl.⁵: **C08F 259/08, C09D 127/12**

(22) Date of filing: **13.11.90**

(30) Priority: **14.11.89 JP 296789/89**

(43) Date of publication of application:
**22.05.91 Bulletin 91/21**

(84) Designated Contracting States:
**DE FR GB IT**

(71) Applicant: **DAIKIN INDUSTRIES, LTD.**
**Umeda Center Building 4-12, Nakazaki-nishi**
**2-chome**
**Kita-ku, Osaka 530(JP)**

(72) Inventor: **Yagi, Toshiharu, c/o Daikin**
**Industries Ltd.**
**1-1, Nishi Hitotsuya**
**Settsu-shi, Osaka-fu(JP)**
Inventor: **Noguchi, Tsuyoshi, c/o Daikin**
**Industries Ltd.**
**1-1, Nishi Hitotsuya**
**Settsu-shi, Osaka-fu(JP)**
Inventor: **Tanaka, Yoshita, c/o Daikin**
**Industries Ltd.**
**1-1, Nishi Hitotsuya**
**Settsu-shi, Osaka-fu(JP)**
Inventor: **Sakaguchi, Kohsaku, c/o Daikin**
**Industries Ltd.**
**1-1, Nishi Hitotsuya**
**Settsu-shi, Osaka-fu(JP)**
Inventor: **Tsuda, Nobuhiko, c/o Daikin**
**Industries Ltd.**
**1-1, Nishi Hitotsuya**
**Settsu-shi, Osaka-fu(JP)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Coating composition.**

(57) The present invention provides a coating composition which comprises a polymer substance obtained by disolving a fluorine-containing polymer in an acrylic monomer, and polymerizing the monomer with or without permitting the resulting polymer to form an interpenetrating polymer network.

## COATING COMPOSITION

The present invention relates to a coating composition having excellent film property and to an article coated or impregnated with the coating composition.

Although a coating composition containing a vinylidene fluoride polymer is excellent in resistances to weather, heat, chemicals, impact, etc., the composition is inferior in adhesion to a substrate, gloss, transparency, etc. Further, the polymer containing vinylidene fluoride must be treated at a high temperature of at least 200 °C in order to melt and adhere to a substrate, and therefore sometimes colors. Various coating compositions are conveniently investigated to obtain excellent characteristics in gloss, hardness, adhesiveness, transparency, heat resistance, chemical resistance, impact resistance, processability, etc., a coating composition which is excellent in all of the above characteristics is seldom developed.

An object of the invention is to provide a coating composition which is excellent in all of weather resistance, heat resistance, chemical resistance, impact resistance, adhesiveness to a substrate, gloss, transparency, processability, etc.

The above and other objects of the invention will become apparent from the following description.

The present invention provides a coating composition which comprises a polymer substance obtained by dissolving a fluorine-containing polymer in an acrylic monomer, and polymerizing the monomer with or without permitting the resulting polymer to form an interpenetrating polymer network, and an article which is coated or impregnated with the coating composition. The compatibility of fluorine-containing polymer and acryl polymer, which is conventionally deemed difficult, is achieved by the present invention, and the above problem can be solved.

The fluorine-containing polymers to be used in the present invention are those dissolve in acrylic monomer, and for example, are a copolymer containing vinylidene fluoride.

The copolymer containing vinylidene fluoride is preferably 500 to a million in number average molecular weight and is obtained by copolymerizing vinylidene fluoride with at least one other copolymerizable monomer. Examples of other monomers are tetrafluoroethylene, chlorotrifluoroethylene, trifluoroethylene, vinyl fluoride, hexafluoropropylene, pentafluoropropylene, hexafluoroisobutene, perfluorocyclobutene, perfluoro(methylcyclopropylene), perfuluoroallene, $\alpha,\beta,\beta$-trifluorostyrene, perfluorostyrene, polyfluoroalkyl vinyl ethers ([e.g., perfluoro(methyl vinyl ether), perfluoro(propyl vinyl ether)], polyfluoroacrylic acid or ester thereof, polyfluorovinyl acetic acid or ester thereof, polyfluorovinyl ether sulfonic acid, polyfluorodienes, ethylene, propylene, acrylic acid or ester thereof and vinyl acetic acid or ester thereof. The content of the monomer is not particularly limited but is preferably 10 to 60 wt%. Among some of these polymers, those having an iodine atom or bromine atom bonded to the polymer chain thereof (see, for example, JP-A-53-125491 and JP-A-59-20310, and JP-B-53-4115) are highly amenable to polymerization reaction and are therefore desirable.

As other fluorine-containing copolymers are enumerated a copolymer of tetrafluoroethylene and propylene, terpolymer of the above components and vinylidene fluoride, copolymer of hexafluoropropylene and ethylene, copolymer of fluorovinyl ether and olefin, and fluorophosphazene polymer.

Acrylic monomers useful for the present invention are not limited in kind, so far as they have fluorine-containing polymer dissolved therein, and include mono-and poly- functional monomers. Examples of preferred monomers are acrylic acid, methacrylic acid, methyl methacrylate (MMA), ethyl methacrylate (EMA),butyl methacrylate (BMA), 2-hydroxyethyl methacrylate (HEMA), 3-(trimethoxysilyl)(propyl methacrylate (MSPM), 2-(phenylphosphoryl)ethyl methacrylate (phenyl-P), 2-hydroxy-3-($\beta$-napthoxy)-propylmethacrylate (HNPM), N-phenyl-N-(2-hydroxy-3-methacryloxy)propylglycine (NPG -GMA), ethylene glycol dimethacrylate (EDMA or 1G), diethylene glycol dimethacrylate (DiEDMA), triethylene glycol dimethacrylate (Tri-EDMA), 1,4-butanediol dimethacrylate (1,4-BuDMA), 1,3-butanediol dimethacrylate (1,3-BuDMA), 2,2-bis[4-(2-hydroxy-3-methacryloxy-propoxy)phenyl]propane (Bis-GMA), 2,2-bis(4-methacryloxyphenyl)propane (BPDMA), 2,2-bis(4-methacryloxyethoxyphenyl))propane (Bis-MEPP), 2,2-bis(4-methacryloxypolyethoxyphenyl)propane (Bis-MPEPP), di(methacryloxyethyl)-trimethylhexamethylenediurethane (UDMA), trimethylolpropanetrimethacrylate (TMPT), $CH_2 = C(CH_3)\text{-}COOCH_2CF_3$ (3FMA), $CH_2 = C(CH_3)COOCH_2CF_2CF_2H$ (4FMA), $CH_2 = C(CH_3)COOCH_2CF_2CF_3$ (5FMA), $CH_2 = C(CH_3)COOCH_2(CF_2)_2CF_3$ (7FMA), $CH_2 = C(CH_3)COOCH_2(CF_2)_3CF_2H$ (8FMA), acrylates and $\alpha$-fluoroacrylates corresponding to such compounds. The monomer is used singly or in a mixture of at least two of them. Particularly preferable are MMA and acrylic monomers containing a fluorine atom.

According to the invention, the fluorine-containing polymer is dissolved in such an acrylic monomer, and the solution is then subjected to polymerization, or further form an interpenetrating polymer network, whereby the polymer substance is prepared. The coating composition of the present invention comprises the polymer substance thus prepared as one component. The polymerization is conducted in the presence of a polymerization initiator. A polymerization inhibitor, reducing agent, transfer agent, etc. can be added to the polymerization system. Examples of useful polymerization initiators are benzoyl peroxide, azoisobutyronitrile (AIBN), camphorquinone (CQ), 9-fluorenone, tributylborane (TBB) and the like. Examples of useful reducing agents are dimethylaminoethyl methacrylate (DMAEMA), dimethyl-p-toluidine (DMPT) and the like. Examples of useful polymerization inhibitors are hydroquinone, hydroquinone methyl ester and the like. Examples of useful transfer agents include lauryl mercaptan. The coating composition of the present invention can be used in the form of one solution, but is preferably used in a manner that a polymerization initiator and reducing agent are added to each of a solution of a fluorine-containing polymer and a solution of an acrylic monomer, and the both soluitons are mixed just before use and the mixture is coated on a substrate.

IPN (interpenetrating polymer network) is a polymer obtained by mixing two linear polymers together each in the form of a liquid (or solution) and crosslinking one or both of the polymers to interlock the respective molecular chains.

For the formation of IPN, crosslinking must be effected. This can be accomplished, for example, by using as the acrylic monomer at least bifunctional monomer, or by using a crosslinking agent.

For this purpose, the acrylic monomers already exemplified are usable. Useful crosslinking agents include, for example, triallyl isocyanurate, triallyl cyanurate, triacryl formal, triallyl trimellitate, diallyl phthalate and like poly-unsaturated compounds. Further, an organic peroxide is also usable as a radical source.

When heat polymerization is resorted to, it is desirable to heat the solution at a temperature of about 55 to about 100 $^{\circ}$C for abourt 10 to about 150 minutes. When to be subjected to photopolymerization, the solution is preferably irradiated with light irradiator for several minutes to tens of minutes. The polymer substance obtained by the above polymerization has a number average molecular weight preferably of about 1000 to 1000000.

The polymer substance obtained by the invention contains an extremely small amount of residual acrylic monomer although the reason still remains to be clarified. Especially when the fluorine-containing polymer is used in amounts exceeding the amount of the monomer, the substance obtained either by heat polymerization or by photopolymerization is free from any residual monomer, whereas when polymethyl methacrylate is polymerized as dissolved in methyl methacrylate, the residual monomer content is 0.5% for heat polymerization and 2.4% for photopolymerization. The present coating composition containing the polymer substance of the invention is thus free from or almost free from detectable residual monomer and is therefore useful as a coating composition for biomaterials, etc.

Further, the present coating composition is useful as protective films for a metal, wood, resin, ceramic, for example, side walls of various vehicles such as an automobile, electric car, airplane and ship, inner or outer covering materials of buildings such as a house, office and factory (roof, side wall, ceiling plate, door, shutter, etc.), furnitures (kitchen goods, air-conditioning units, steel furniture, home electric device, etc.) and outdoor constructions (petroleum tank, etc.). Further, the present coating composition is useful as protective films as impregnated or coated to a tent, truck hood and like textile or cloth. The present coating composition is not only excellent in weather resistance, etc., but also the printing can be provided on the film thereof, unlike the conventional PTFE-impregnated material. Moreover, the present coating composition is excellent in transparency and adhesiveness, and is useful as films for preventing scattering of inorganic glass or organic glass such as acrylic glass.

In addition, the present coating composition has excellent vibration-proofness and damping property. Accordingly, the present coating composition is useful as vibration-proof damping coating composition for machines or factory facilities in construction, agriculture or civil engineering, such as a metal-processing machine, duct, hopper, chute, etc.

It is possible to add, as required, to the present coating composition a known resin, solvent, pigment, filler, dispersing agent, lubricant, abrasive, antistatic agent, etc. in an amount which does not cause adverse effect. In order to improve adhesiveness, it is possible to precoat a metal surface with a silane coupling agent, and further cure the agent.

The invention will be desdribed with reference to the following examples and comparative examples, in which the percentages are by weight.

Example 1

In 5 parts by weight of methyl methacrylate (MMA) was dissolved 5 parts by weight of Dai-el® G801 (iodine-containing elastic copolymer containing vinylidene fluoride). To the solution were added camphorquinone (CQ) and dimethylaminoethyl methacrylate (DMAEMA) each in an amount of 0.6 wt% based on MMA. The mixture was allowed to place in a constant-temperature chamber at 37 °C for one day with homogeneous mixing to obtain composition. The coating composition was applied to an aluminum plate (JIS H4000) previously treated with acetone to remove oil and fat, and was irradiated by use of light irradiation device for 20 minutes to obtain a coated film. The properties of the film were measured and the results were given in Table 1.

The film thickness was measured with use of Permascope EW, a product of Helmut Fischer GmbH.

The 60° mirror glass of the film was measured by a degital variable angle glossmeter (UGV-5D, Suga Testing Machine KK).

Pin drawing test was conducted according to JIS K6894.

Pencil hardness was measured by use of a pencil -scratching tester for coating film (JIS K5401).

Cross-cut test was conducted according to JIS D0202.

Example 2

A coating composition was prepared in the same manner as in Example 1 except that 3FMA was used in place of MMA . The coating compositions was applied and cured similarly and the film properties were shown in Table 1.

Table 1

|  | film thickness (μm) | gloss | pin drawing test | pencil hardness | cross-cut test |
|---|---|---|---|---|---|
| Ex. 1 | 120 | 470 | 5 | H | 100/100 |
| Ex. 2 | 120 | 498 | 4 ∼ 5 | H | 100/100 |

Example 3

To 4.75 parts by weight of methyl methacrylate (MMA) were added with stirring 0.25 part by weight of ethylene glycol dimethacrylate (1G), 0.03 part by weight of camphorquinone (CQ), 0.03 part by weight of dimethylaminoethyl methacrylate (DMAEMA), 0.2 part by weight of triallyl isocyanurate (TAIC) and 0.075 part by weight of Perhexa 2.5B [Nippon Oil & Fats Co., Ltd., peroxide]. The mixture was added to 5 parts by weight of Dai-el® G801 (iodine-containing elastic copolymer containing vinylidene fluoride), and was allowed to place in a constant-temperature chamber at 37 °C for one day with homogeneous mixing to obtain a coating composition. The coating composition was applied to an aluminum plate previously treated with acetone to remove oil and fat, and was irradiated by use of light irradiation device for 20 minutes for curing acrylic components, and further heated in an constant-temperature chamber at 160 °C for 10 minutes for curing G801 to obtain a coated film. The properties of the film were measured and the results were given in Table 2.

Table 2

|  | film thickness (μm) | gloss | pin drawing test | pencil hardness | cross-cut test |
|---|---|---|---|---|---|
| Ex. 3 | 80 | 480 | 4 ∼ 5 | H | 100/100 |

Example 4

In 12 g of MMA was dissolved 8 g of a copolymer of vinylidene fluoride and chlorotrifluoroethylene (vinylidene fluoride 55 mole%). To the solution were added 0.07 g of CQ and 0.07 g of DMAEMA. The mixture was allowed to place in dark in a constant- temperature chamber at 37 °C for 2 days to obtain a homogeneous coating composition. The coating composition was applied to an oxalate alumite-treated aluminum plate which was previously coated with a silane coupling agent A-174 [Nippon Unicar Co., Ltd., γ-methacryloxy-propyltrimethoxysilane] and heat-treated at 100 °C for 30 minutes, and was irradiated by use of light irradiation device for 20 minutes to obtain a coated film. The properties of the film were measured and the results were given in Table 3.

Example 5

In a mixture of 12 g of MMA and 0.6 g of EDMA was dissolved 8.4 g of a copolymer of vinylidene fluoride and chlorotrifluoroethylene [P(VdF-CTFE), vinylidene fluoride 55 mol%]. To the solution were added 0.07 g of CQ and 0.07 g of DMAEMA, 0.33 g of TAIC and 0.13 g of Perhexa 2.5B. The mixture was allowed to place in dark in a constant-temperature chamber at 37 °C for 2 days to obtain a homogeneous coating composition. The coating composition was applied to an oxalate alumite-treated aluminum plate which was previously coated with a silane coupling agent A-187 [Nippon Unicar Co., Ltd., γ-glycidoxypropyltrimethoxysilane] and heat-treated at 100 °C for 30 minutes, and was irradiated by use of light irradiation device for 20 minutes, and heated in a constant-temperature chamber at 160 °C for 10 minutes for curing P(VdF-CTFE) to obtain a coated film. The properties of the film were measured and the results were given in Table 3.

Table 3

|  | film thickness (μm) | pin drawing test | pencil hardness | cross-cut test |
|---|---|---|---|---|
| Ex. 4 | 60 | 4 ~ 5 | 2 H | 100/100 |
| Ex. 5 | 30 | 4 ~ 5 | 2 H | 100/100 |

In Example 5, the coating film was further immersed in hot water of 95 °C for 5 hours and subjected to cross-cut test with the result of 100/100.

**Claims**

1. A coating composition which comprises a polymer substance obtained by dissolving a fluorine-containing polymer in an acrylic monomer, and polymerizing the monomer with or without permitting the resulting polymer to form an interpenetrating polymer network.

2. A coating composition as defined in claim 1 wherein the fluorine-containing polymer is a copolymer containing vinylidene fluoride, copolymer of tetrafluoroethylene and propylene, terpolymer of the tetrafluoroethylene, propylene and vinylidene fluoride, copolymer of hexafluoropropylene and ethylene, copolymer of fluorovinyl ether and olefin or fluorophosphazene polymer.

3. A coating composition as defined in claim 2 wherein the fluorine-containing polymer is a copolymer containing vinylidene fluoride.

4. The use of a coating composition according to any one of claims 1-3 for coating or impregnating a substrate.

5. An article which is coated or impregnated with the coating composition of any one of claims 1-3.